# EUROPÄISCHE PATENTSCHRIFT

(11) **EP 2 343 203 B1**
(45) Veröffentlichungstag und Bekanntmachung des Hinweises auf die Patenterteilung: **26.02.2014**
(21) Anmeldenummer: 10015564.7
(22) Anmeldetag: 13.12.2010
(51) Int. Cl.: B60G 17/016, B60G 17/00, B60G 17/015, B60G 17/019, B60N 2/50

(54) **Verfahren zur Steuerung des Betriebs eines Kraftfahrzeugs und Kraftfahrzeug**
Method for controlling the operation of a motor vehicle and motor vehicle
Procédé de commande du fonctionnement d'un véhicule automobile et véhicule automobile

(30) Priorität: 16.12.2009 DE 102009058492
(43) Veröffentlichungstag der Anmeldung: 13.07.2011
(73) Patentinhaber: Audi AG, 85045 Ingolstadt (DE)
(72) Erfinder: Freyer, Jörn, Dr., 81827 München (DE); Brenneis, Oliver, 85748 Garching (DE); Schindler, Andreas, 85055 Ingolstadt (DE)
(74) Vertreter: Thielmann, Frank

(56) Entgegenhaltungen:
- EP-A1- 2 048 008
- EP-A2- 0 237 919
- EP-A2- 2 052 888
- DE-A1- 3 918 735
- DE-A1- 19 922 745

## Beschreibung

Die Erfindung betrifft ein Verfahren zur Steuerung des Betriebs eines Kraftfahrzeugs und ein zugehöriges Kraftfahrzeug.

In heutigen Kraftfahrzeugen ist es bekannt, Komfortfunktionen, die den Fahrer bei seiner Tätigkeit unterstützen und auf ein möglichst angenehmes Fahrgefühl ausgelegt sind, vorzusehen. Beispielsweise sind verschiedene Betriebsmodi für das Fahrwerk bekannt und/oder es können verschiedene Kennlinien für die Pedal- und Lenkradbetätigung ausgewählt werden. Geräuschfilterungssysteme und dergleichen sowie im Fahrwerk vorgesehene Dämpfungs- und Kompensionsmechanismen sorgen für ein positives Fahrerlebnis des Fahrers.

Die EP 2052888 offenbart ein Verfahren zur Steuerung des Betriebs eines Kraftfahrzeuges.

Diese bekannten Betriebsverfahren für Kraftfahrzeuge weisen jedoch Nachteile für Passagiere auf, also insbesondere auf dem Beifahrersitz oder im Fond im Kraftfahrzeugs befindliche Personen. Die nicht von ihnen gesteuerten Unregelmäßigkeiten beim Fahren, also Abweichungen von einem gleichmäßigen Anregungsfrequenz- und Beschleunigungsspektrum, können beispielsweise zu Übelkeit führen. Häufig versuchen Passagiere auch, während der Fahrt anderen Tätigkeiten nachzugehen, bei denen sie gestört werden können. Wird beispielsweise versucht, zu arbeiten oder zu lesen, können Störungen durch den aktuellen Betriebszustand des Kraftfahrzeugs auftreten. Auch ein Einschlafen oder Entspannen des Passagiers wird durch teilweise bereits kleine Änderungen im Betriebszustand des Kraftfahrzeugs oder allgemein dem Fahrzeugzustand behindert. Zusätzlich kann es beim Essen und Trinken beispielsweise leicht zum Verschütten bei einer plötzlichen Beschleunigung oder dergleichen kommen. Auch Geräusche sind, wie erwähnt, häufig ein Anlass für ein verringertes Wohlbefinden bei einem Passagier.

Von besonderer Bedeutung sind diese Einschränkungen des Fahrkomforts für Passagiere in Kraftfahrzeugen, in denen ein Chauffeur einen Passagier besonders komfortabel zu einem Ziel bringen soll. Dann sind die häufig auf den Fahrer ausgelegten Komfortfunktionen nicht zielgerichtet einsetzbar, um dem eigentlich relevanten Passagier ein möglichst angenehmes und entspanntes Fahrerlebnis zu verschaffen.

Der Erfindung liegt daher die Aufgabe zugrunde, ein Betriebsverfahren für ein Kraftfahrzeug anzugeben, mit welchem ein angenehmes Fahrerlebnis, insbesondere bei verschiedenen Tätigkeiten, für einen Passagier realisiert werden kann.

Zur Lösung dieser Aufgabe ist erfindungsgemäß ein Verfahren mit den Merkmalen des Anspruchs 1 vorgesehen.

Erstmals wird demgemäß vorgeschlagen, die Ansteuerung von Fahrzeugsystemen, jeweils den aktuellen Zustand des Kraftfahrzeugs, also dem Betriebszustand, berücksichtigend, im Hinblick auf einen Passagier vorzunehmen. Ein derart gesteuertes Kraftfahrzeug bietet also Funktionen, die den Passagier aktiv beim Entspannen oder bei anderen Tätigkeiten unterstützen können. Das Kraftfahrzeug passt während der Fahrt kontinuierlich die Einstellungen der Fahrzeugsysteme so an, dass ein Entspannen der Mitfahrer (Passagiere) optimal unterstützt wird. Dabei kann insbesondere vorgesehen sein, dass es sich um eine anwählbare Option handelt. Es kann also bedienerseitig entschieden werden, ob der Fokus des Wohlbefindens und der Komfortsteigerung auf den Fahrer oder einen oder mehrere Passagiere gelegt werden soll. Insbesondere kann dies auch sitzplatzspezifisch erfolgen, so dass eine sitzplatzspezifische individuelle Steigerung des Fahrkomforts für die Passagiere in allen Fahrsituationen möglich ist.

Die Ansteuerung erfolgt im Hinblick auf einen möglichst gleichmäßigen, stabilen Zustand, insbesondere an wenigstens einem nicht dem Fahrer zugeordneten Sitzplatz. Insbesondere sitzplatzspezifisch, worauf im Folgenden noch näher eingegangen werden wird, erfolgt die Ansteuerung mithin so, dass Abweichungen von einem dort vorliegenden Grundzustand ― also beispielsweise einem bestimmten Anregungsspektrum ― möglichst vermieden werden. Ein gleichförmiger Zustand auf dem Sitzplatz eines Passagiers, dessen Erreichen idealerweise den Fahrer nicht negativ beeinflusst, stört den Passagier folglich auch wenig bei den Tätigkeiten, die er oder sie durchführt.

Das Anregungsfrequenz- und Beschleunigungsspektrum wird an einem Sitz analysiert und zur Vergleichmäßigung des Anregungsfrequenz- und Beschleunigungsspektrums an dem Sitz wenigstens ein Fahrwerksystem und/oder wenigstens ein an dem Sitz angeordneter Aktuator angesteuert. Dabei können an dem Sitz selber Sensoren vorgesehen sein, mittels derer das Anregungsfrequenz- und Beschleunigungsspektrum ermittelt wird, denkbar ist es jedoch auch, an anderen Orten zu messen und/oder ohnehin gemessene indirekte Einflussgrößen zu berücksichtigen, um über die bekannten Zusammenhänge die Auswirkungen an den Sitz zu bestimmen. Wird das Anregungsfrequenzund Beschleunigungsspektrum vergleichmäßigt, so fällt nicht nur eine eine Tätigkeit des Passagiers beeinträchtigende Störquelle weg, sondern es wird auch eine der hauptsächlichen Ursachen für Übelkeit oder dergleichen reduziert oder gänzlich beseitigt.

Zweckmäßigerweise kann das Fahrwerkssystem in einem komfortablen Betriebsmodus betrieben werden und/oder wenigstens ein Aktuator eines Fahrwerksystems zur Kompensation von inneren und/oder äußeren Anregungen des Kraftfahrzeugs angesteuert werden. Es wird also beispielsweise kein sportlicher Betriebsmodus gewählt, sondern ein sanfter, weicher Betriebsmodus. Dabei muss es sich nicht um einen vorgegebenen Betriebsmodus handeln, sondern es können auch Schwellwerte verschiedener Fahrwerkssysteme und/oder Kennlinien von Lenkrad und Pedalerie angepasst werden. Im Allgemeinen wird das Ziel hierbei sein, ruckartige und plötzliche, den gleichmäßigen Betrieb des Kraftfahrzeugs störende Manöver durch den Fahrer und/oder auch Fahrwerkssysteme, beispielsweise ein ESP-System, möglichst zu vermeiden. Dabei sei bereits an dieser Stelle darauf hingewiesen, dass innere Anregungen, also vom Fahrer durch Betätigung der Bedienelemente beabsichtigte Fahrmanöver, meist aufgrund von kurzen Totzeiten bis zur Ausführung (beispielsweise tatsächliches Bremsen oder tatsächliche Beschleunigung) etwas vorab bekannt sind, was im erfindungsgemäßen Verfahren ausgenutzt werden kann, auch im Bezug auf die Aktuatorik, welche im Folgenden noch näher beschrieben wird.

Ein grundsätzlicher Ausgleich von Bewegungen des Kraftfahrzeugs, beispielsweise ein Nick- und Wankausgleich, durch Fahrwerkssysteme ist bereits bekannt. Dabei werden Federungen, Dämpfer, Stabilisatoren und dergleichen aktiv angesteuert und ausgenutzt. Es verbleibt jedoch meist ein Rest, was für den Fahrersitz und den Fahrer selbst meist auch sinnvoll ist, da dieser die Reaktion auf seine Fahrmanöver üblicherweise spüren möchte. Eine völlige Entkopplung vom Fahrverhalten durch die Fahrwerkssysteme ist daher zumindest an der Position des Fahrers meist nicht erwünscht.

Es kann im Übrigen weiterhin vorgesehen sein, dass die Aktivierung und/oder die Deaktivierung wenigstens eines Fahrerassistenzsystems ausgeschaltet wird. So kann dem Fahrer der Einsatz eines ACC-Systems oder einer Servolenkung untersagt werden, wenn dieser, beispielsweise aufgrund seiner Ausbildung als Chauffeur, ohnehin eine sanftere Fahrweise pflegt. Auch gewisse Betriebsmodi, beispielsweise ein sportlicher Modus, können ausgeschlossen bleiben.

Die ebenfalls möglichen, am Sitz angeordneten Aktuatoren können zusätzlich vorgesehen werden und/oder einem ohnehin vorhandenen sitzbezogenen Fahrzeugsystem zugeordnet sein, beispielsweise einem System zum automatischen Verstellen des Sitzes und/oder einem in dem Sitz verbauten Massagesystem. Meist wird es sich dabei um Sitzmotoren handeln, aber es sind auch andere Aktuatoren denkbar. Ziel ist es nun, zum Erzeugen eines möglichst gleichmäßigen und stabilen Zustands wenigstens bis zu einem gewissen Grad eine Entkopplung des Sitzes von Abweichungen im Betriebszustand oder gar vom gesamten Betrieb des Kraftfahrzeugs zu erreichen.

Insbesondere können Anregungsspitzen, beispielsweise beim Fahren über einen Gegenstand oder ein Schlagloch, aber auch bei starkem Bremsen oder dergleichen, welche durch entsprechende Sensoren detektierbar sind, durch entsprechende Ansteuerung der Aktuatoren ausgeblendet werden, was zur Stabilisierung und Gleichförmigkeit des Spektrums an dem Sitz beiträgt.

Der Sitz kann dabei im Übrigen ein Einzelsitz, beispielsweise ein Beifahrersitz und/oder ein als Teil einer Bank im Fond des Kraftfahrzeugs entkoppelter Sitz und/oder eine gesamte Bank, insbesondere im Fond des Kraftfahrzeugs, sein.

Dabei kann vorgesehen sein, dass Bedienelemente zur Einstellung eines Wunschanregungsfrequenz- und ―beschleunigungsspektrums, insbesondere eine Amplitude, und/oder zur Einstellung eines Entkopplungsgrades zur Entkopplung des Sitzes vom tatsächlichen Fahrverhalten, verwendet werden. Auf diese Weise ist sowohl das Niveau der Anregungen bzw. Beschleunigungen einstellbar wie auch der Grad der Entkopplung. Dabei kann auf spezielle Wünsche des Passagiers eingegangen werden. Beispielsweise werden Passagiere, die während des Fahrens aus dem Fenster sehen, keine vollständige Entkopplung bevorzugen, während andere Passagiere beispielsweise die Motorengeräusche und die Schwingungen des Kraftfahrzeugs als dem Schlaf zuträglich empfinden, worauf im Folgenden noch näher eingegangen werden wird. Ein solches Bedienelement zur Einstellung eines Entkopplungsgrades kann beispielsweise als ein Drehregler vorgesehen sein.

Weiterhin kann vorgesehen sein, dass eine Ansteuerung von an dem Sitz angeordneten Aktuatoren, insbesondere von Sitzmotoren, in Abhängigkeit von Betriebsgrößen des Kraftfahrzeugs, insbesondere eines Lenkeinschlags und/oder einer Pedalbetätigung, und/oder der Größe und/oder des Gewichts und/oder der Lage eines ausgezeichneten Körperpunktes, insbesondere des Massenschwerpunktes des Torsos, einer auf dem Sitz anwesenden Person erfolgt. Wie erwähnt, können dabei mit besonderem Vorteil Stellungen der Pedale oder des Lenkrads berücksichtigt werden, da bis zum tatsächlichen Effekt der Betätigung noch eine gewisse Totzeit verbleibt, die eine frühzeitige Gegensteuerung durch die Aktuatoren erlaubt und so fahrerinitiierte Abweichungen von einem gleichförmigen und/oder stabilen Anregungs- bzw. Beschleunigungszustand besonders komfortabel und sicher ausgleichbar macht. Doch auch bei plötzlich auftretenden Anregungen, beispielsweise beim Überfahren eines Steins oder einer Straßenunebenheit, können reaktive Gegenaktionen der Aktuatoren angesteuert werden, die im Wesentlichen zu einem Ausgleich dieser Störung führen.

Auch die Eigenschaften der Person, also des Passagiers, deren Komfort erhöht werden soll, können vorteilhaft berücksichtigt werden. Dabei kann die tatsächliche Art des Ausgleichs an Größe und Gewicht des Passagiers orientiert werden, insbesondere ist es aber vorteilhaft, wenn die Lage eines relevanten Körperpunktes, beispielsweise über eine Kamera, ermittelt wird und somit bekannt ist. Dabei werden häufig Massenschwerpunkte betrachtet, die auf eine möglichst geringe Bewegung der inneren Organ abzielen, vgl. hierzu aktuelle Konstruktionen im Bau von Achterbahnen. Denn es ist bekannt, dass starke Bewegungen der Extremitäten meist wenig Einfluss auf das Wohlbefinden einer Person haben, aber danach zu streben ist, dass die inneren Organe des Körpers möglichst in Ruhe bleiben und keinen Anregungen unterworfen werden. Somit kann die Ansteuerung im erfindungsgemäßen Verfahren in einer derartigen Ausgestaltung beispielsweise so erfolgen, dass störende Bewegungen und Anregungen im Bereich der inneren Organe des Passagiers besonders effektiv vermieden werden.

In weiterer vorteilhafter Ausgestaltung des erfindungsgemäßen Verfahrens kann vorgesehen sein, dass insbesondere sitzplatzbezogen ein akustisches Ausgabemittel, insbesondere Lautsprecher einer Audioanlage, und/oder Dämpfungsmittel und/oder Filtermittel zur Abdämpfung und/oder Filterung von Außengeräuschen im Innenraum zur Komfortsteigerung ansteuert werden. Es sind bereits heute Systeme bekannt, die nicht nur eine passive Dämpfung von Außengeräuschen im Kraftfahrzeug erlauben, sondern auch eine aktive Dämpfung durch Erzeugung von Gegenschwingungen oder dergleichen zu Erzeugen suchen. Dabei kann beispielsweise vorgesehen werden, dass gerade am Ort des Passagiers eine hervorragende Aufhebung der Geräuschspektra erfolgt. Auch anpassbare Geräuschdämpfer sind in heutigen Kraftfahrzeugen bekannt, so dass im erfindungsgemäßen Verfahren beispielsweise bei verschiedenen Betriebszuständen eine gleichmäßige Lautstärke und ein gleichmäßiges Profil der Geräusche erhalten werden kann. Auch sind Systeme bekannt, die Außengeräusche bestimmter Art ausfiltern und nur bestimmte Geräusche ins Innere des Kraftfahrzeugs weiterleiten. Diese können beispielsweise genutzt werden, um bestimmte, die Gleichmäßigkeit störende Geräusche auszublenden. Auch die Erzeugung eines Grundgeräuschpegels, insbesondere auch durch Musik, ist denkbar. Auch Kraftfahrzeuge, bei denen die Auspuffgeräusche anpassbar sind, sind bereits bekannt. Fahrzeuggeräusche können also im Rahmen des erfindungsgemäßen Verfahrens beispielsweise aktiv abgesenkt werden und somit das Entspannen begünstigen. Darüber hinaus können die Außengeräusche verstärkt gefiltert bzw. gedämmt werden.

In weiterer Ausgestaltung des erfindungsgemäßen Verfahrens kann vorgesehen sein, dass die Maßnahmen zur Komfortsteigerung bedienerseitig parametrierbar und/oder einstellbar sind, wobei insbesondere wenigstens eine Konfiguration gespeichert wird und/oder wenigstens eine Konfiguration aus mehreren Konfigurationen ausgewählt wird. Der Bediener, insbesondere der Passagier, hat also die Möglichkeit, aktiv die Art der Komfortsteigerung zu beeinflussen, beispielsweise durch den bereits diskutierten möglichen Drehregler für den Grad der Entkopplung seines Sitzes von der Fahrzeugbewegung. Dabei können insbesondere Konfigurationen abgespeichert werden, die von dem Passagier als besonders komfortabel empfunden werden und dann später wieder aufgerufen werden können. Es ist denkbar, dass beispielsweise für verschiedene Tätigkeiten, beispielsweise Schlaf, lesen, essen, trinken etc., auch schon mehrere vorbestimmte Konfigurationen vorliegen oder solche Konfigurationen durch einen Bediener für sich selbst parametriert und gespeichert werden, um in den entsprechenden Situationen wiederverwendet werden zu können. So kann die Komfortsteigerung noch besser auf den jeweiligen Passagier angepasst werden.

In einer besonders vorteilhaften Ausgestaltung des erfindungsgemäßen Verfahrens kann vorgesehen sein, dass ein den Zustand des Passagiers, insbesondere eine Tätigkeit, beschreibender Wert, insbesondere anhand von Innenraumsensoren, ermittelt und ebenso bei der Ansteuerung der Fahrzeugsysteme berücksichtigt wird. Analog ist es im Übrigen auch denkbar, dass der Passagier sich identifiziert oder identifiziert wird, was ebenso einen Einfluss auf die Art der Komfortsteigerung haben kann. Beispielsweise über eine Sitzbelegungserkennung kann auch die Tätigkeit und/oder die Stimmung des Passagiers erkannt werden, beispielsweise "schlafen", "lesen", "essen und trinken" usw. Die Erkennung kann dabei über videobasierte und/oder audiobasierte Sensoren, Sensoren zur Schwingungsanalyse, Sensoren zur Temperaturmessung und dergleichen erfolgen. Denkbar sind also Kameras und Mikrofone, es können jedoch auch zusätzlich physiologische Sensoren vorgesehen sein, die medizinische Kenngrößen aufnehmen, beispielsweise die Pulsfrequenz, den Hautleitwert, die Körpertemperatur, den Blutdruck und dergleichen. Solche physiologischen Sensoren können beispielsweise im Gurt oder einer Armlehne vorgesehen werden.

In diesem Zusammenhang kann mit besonderem Vorteil auch eine Beleuchtungseinrichtung und/oder eine Klimaanlage und/oder eine Abdunklungseinrichtung und/oder eine Funktion einer Kopfstütze und/oder am Sitz vorgesehene Aktuatoren in Abhängigkeit des den Zustand des Passagiers beschreibenden Werts angesteuert werden. Hierbei sind verschiedene Ausgestaltungen denkbar, die sich bei der Komfortsteigerung mithin auch an der konkreten Tätigkeit und der konkreten Stimmung des Passagiers orientieren können. Beispielsweise kann eine Schlafkopfstütze aktiviert werden, wenn der Passagier zu schlafen gedenkt oder gar bereits schläft. Mit besonderem Vorteil kann auch vorgesehen sein, dass zusätzliche Geräusche und/oder Anregungen, beispielsweise Vibrationen, erzeugt und eingespielt werden, wenn das Fahrzeug steht, was beispielsweise anhand der Raddrehzahl ermittelt werden kann. Denn es ist bekannt, dass schlafende Passagiere häufig aufwachen, wenn die Gleichmäßigkeit der Anregungen und Geräusche durch einen Stillstand des Kraftfahrzeug gestört wird. Auch eine automatische Sitzverstellung ist im Fall des Schlafes oder Einschlafwunsches des Fahrers denkbar. Vorteilhaft kann auch vorgesehen sein, insbesondere, wenn entsprechende Aktuatoren am Sitz vorgesehen sind, dass eine schaukelnde Bewegung erzeugt wird, die den Schlaf bzw. das Einschlafen verbessert. Ist beispielsweise ein Babysitz vorgesehen, so kann ein Baby als Passagier in den Schlaf gewiegt werden. Ist dies beispielsweise mit einer Entkopplung des entsprechenden Sitzes von den Fahrzeugbewegungen durch Aktuatoren am Sitz verbunden, steht einem störungsfreien Schlaf des Säuglings nichts mehr im Weg. Doch auch bei anderen Tätigkeiten ist vorteilhaft eine Komfortanpassung denkbar. So kann zum Lesen das Licht, insbesondere die Lichtverteilung, angepasst werden. Eine gegebenenfalls noch im Schlaf vorgesehene Lichtabdunklung kann aufgehoben werden. Eine vollständige Entkopplung des Fahrersitzes von den Anregungen des Kraftfahrzeugs kann beispielsweise kann sinnvoll sein, wenn der Fahrer liest oder einen Laptop bedient und seine Aufmerksamkeit folglich ohnehin nicht der Fahrzeugumgebung widmet, was auch beim Ansehen eines Films oder dergleichen denkbar ist. Beginnt der Passagier dann zu essen oder zu trinken und schaut dabei regelmäßig aus dem Fenster, kann der Grad der Entkopplung wieder reduziert werden, um ein Unwohlsein oder eine Übelkeit des Passagiers zu vermeiden. Auch die Anpassung der Klimaanlage auf die entsprechende Stimmung bzw. die entsprechende Tätigkeit, beispielsweise eine aktive Wärme- bzw. Kältebehandlung, ist möglich. Eine Lichtbehandlung kann im Übrigen weit über die ideale Ausleuchtung hinausgehen und beispielsweise eine UV-Therapie oder eine Stimmungsaufhellung beispielsweise durch die Farbwahl umfassen. Eine Massage durch eine Massagefunktion ist ebenso denkbar. Ersichtlich können eine Vielzahl von Fahrzeugsystemen berücksichtigt werden, neben der Innenbeleuchtung können also die Klimaanlage, aktive Schlaf- oder Entspannkopfstützen, Rollos oder elektrochromatische Scheiben zur Abdunklung und dergleichen angesteuert werden.

In Weiterbildung der Erfindung kann vorgesehen sein, dass, insbesondere bei Standphasen, neben dem Verbrennungsmotor auch eine Autobatterie und/oder eine externe Energiequelle zum Betrieb der Fahrzeugsysteme genutzt wird. Damit ist es also möglich, den Komfort in verschiedenen Situationen aufrecht zu erhalten, in denen beispielsweise keine Energieerzeugung durch den Verbrennungsmotor mehr stattfindet. Beispielsweise kann eine Schaukelbewegung für einen Säugling auch fortgesetzt werden, während die Eltern bereits das Kraftfahrzeug entladen. Der Schlaf des Säuglings wird nicht gestört und ein gleichförmiger Zustand kann dennoch aufrechterhalten werden, ohne dass das Kraftfahrzeug dabei noch fahren muss.

Schließlich kann vorgesehen sein, dass bei einem stillstehenden, insbesondere einem parkenden Kraftfahrzeug auch eine Berücksichtigung des Fahrerkomforts, insbesondere sitzplatzbezogen, erfolgt. Auch dem Fahrer können die genannten Komfortfunktionen folglich zur Verfügung gestellt werden, wenn dies der Sicherheit nicht abträglich ist, also insbesondere bei einem stehenden Kraftfahrzeug im Stau oder bei Wartezeiten, beispielsweise auch auf einem Parkplatz oder dergleichen.

Neben dem Verfahren betrifft die Erfindung auch ein Kraftfahrzeug mit einem zur Durchführung des erfindungsgemäßen Verfahrens ausgebildeten Steuergerät. Dabei lassen sich selbstverständlich sämtliche Ausführungen bezüglich des Verfahrens auch auf das Kraftfahrzeug übertragen. Insbesondere kann ein derartiges Kraftfahrzeug verschiedene Sitze aufweisen, wobei insbesondere die Passagiersitze mit einer Aktuatorik versehen sind, die zumindest bis zu einem gewissen Grad eine Entkopplung der Bewegung des Sitzes von der das Kraftfahrzeugs erlauben.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs, und
- Fig. 2: eine Skizze zur Erläuterung des erfindungsgemäßen Verfah- rens.

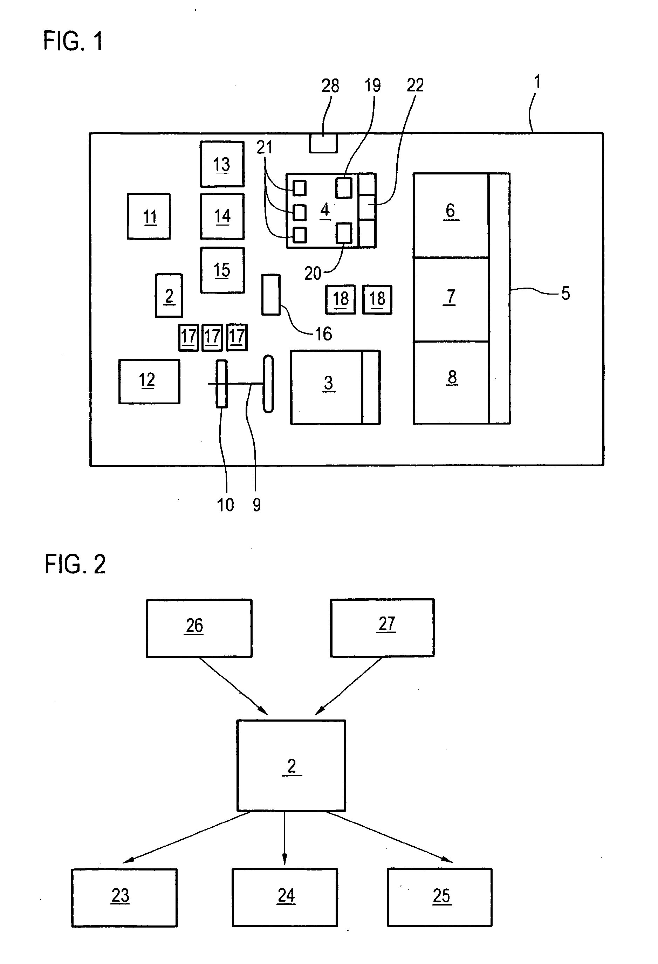

Fig. 1 zeigt ein Kraftfahrzeug 1, in dem das erfindungsgemäße Verfahren durchgeführt werden kann. Es umfasst ein Steuergerät 2, das zur Durchführung des erfindungsgemäßen Verfahrens durch Ansteuerung verschiedener Fahrzeugsysteme, von denen hier nur einige exemplarisch dargestellt sind, ausgebildet ist.

Das Kraftfahrzeug 1 umfasst einen Fahrersitz 3, einen Beifahrersitz 4 und eine Rückbank 5, die in drei unabhängig bewegbare Sitze 6, 7 und 8 aufgeteilt ist, worauf im Folgenden noch näher eingegangen werden wird.

Der Fahrersitz 3 ist wie bekannt benachbart dem Lenkrad 9 und der Pedalerie 10 angeordnet, so dass der Fahrer von ihm aus den Fahrbetrieb des Kraftfahrzeugs 1 steuern kann. Fahrwerksysteme, hier beispielhaft gezeigte Fahrwerksysteme 11 und 12, kontrollieren verschiedenen Funktionen des Fahrwerks, wobei beispielsweise ein ESP-System und dergleichen vorgesehen sein kann. Zudem sind einige Komfortfunktionen vorhanden, von denen hier beispielhaft ein Innenbeleuchtungssystem 13, eine Klimaanlage 14 und ein Geräuschdämpfungs- und Filterungssystem 15 dargestellt sind. Selbstverständlich können eine Vielzahl weiterer Systeme vorhanden sein, beispielsweise elektrochromatisch abdunkelbare Scheiben, ein Auspuff mit einer anpassbaren Lautstärke, usw. Über Bedienelemente 16 können sowohl der Fahrer als auch Passagiere Eingaben tätigen, insbesondere auch Eingaben, die die konkrete Ansteuerung durch das Steuergerät 2 betreffen. Ebenso nur schematisch angedeutet sind bei 17 eine Vielzahl von Sensoren, die neben Umfeldsensoren auch verschiedenste den Betriebszustand des Kraftfahrzeugs aufnehmende Sensoren umfassen können. Ferner sind auch Innenraumsensoren 18 vorhanden. Die Sensoren 17 können beispielsweise Beschleunigungssensoren, Drehzahlsensoren, Lenkwinkelsensoren, Reifensensoren, Temperatursensoren und dergleichen umfassen. Die Innenraumsensoren 18 können Kameras, Mikrofone, Temperatursensoren, Schwingungssensoren, physiologische Sensoren (beispielsweise im Gurt oder einer Armlehne vorgesehene Sensoren zur Messung der Herzfrequenz und des Blutdrucks) und dergleichen sein.

Das Steuergerät 2 ist nun dazu ausgebildet, wenigstens ein Fahrzeugsystem zur Komfortsteigerung eines Passagiers des Kraftfahrzeugs 1 anzusteuern, wie im Folgenden am Beispiel des Sitzes 4 erläutert werden wird, wobei jedoch selbstverständlich auch die Sitze 6, 7 und 8 entsprechende Funktionalitäten aufweisen können. Damit wird folglich der Fokus nicht auf den Fahrer auf dem Sitz 3 gelegt, sondern auf einen zu transportierenden Passagier. Ein Modus, in dem der Komfort vollständig auf einen Passagier ausgelegt wird, kann beispielsweise über die Bedienelemente 16, insbesondere ein Mensch-Maschine-Interface, eingestellt werden. Dabei berücksichtigt das Steuergerät 2 auch den aktuellen Betriebszustand, der aus Daten der Sensoren 17 und 18 hergeleitet werden kann. Ziel ist dabei ein möglichst gleichmäßiger, stabiler Zustand für den entsprechenden Passagier, hier also am Sitzplatz 4, wobei selbstverständlich entsprechende Funktionen für alle anderen Sitzplätze zur Verfügung stehen können.

Insbesondere weist im vorliegenden Ausführungsbeispiel jeder Sitz, wie beim Sitz 4 angezeigt, eine Massageeinrichtung 19, eine Sitzeinstellungseinrichtung 20 und weitere Aktuatoren 21 auf, mit denen insbesondere Bewegungen verschiedener Frequenzen wie auch in gewissen Maße Beschleunigungen an dem Sitz realisiert werden könne. Dabei handelt es sich in den meisten Fällen um Sitzmotoren, die verschiedene Funktionalitäten erlauben, worauf im Folgenden noch näher eingegangen werden wird. Ferner, hier beispielhaft wieder nur am Sitz 4 dargestellt, weist der Sitz eine Schlaf- und Entspannungskopfstütze 22 auf.

Fig. 2 zeigt in einer Prinzipskizze die grundlegenden Abläufe des erfindungsgemäßen Verfahrens. Im Zentrum steht das Steuergerät 2, welches zur Ansteuerung verschiedenster Fahrzeugsysteme ausgebildet ist, hier im Hinblick auf eine Komfortsteigerung im Sinne einer Zustandsvergleichmäßigung in Bezug auf das Anregungsfrequenz- und Beschleunigungsspektrum, Block 23, die Akustik, Block 24, und weitere Komfortfunktionen, Block 25, beispielsweise die Klimaanlage 14 und das Beleuchtungssystem 13. Als Eingangdaten dienen dem Steuergerät 2 hierzu hauptsächlich über die Sensoren 17 ermittelte, den aktuellen Betriebszustand des Kraftfahrzeugs beschreibende Daten 26 sowie wenigstens ein den aktuellen Zustand des Passagiers, insbesondere eine Tätigkeit, beschreibender Wert 27, der hauptsächlich über die Sensoren 18 ermittelt wird. Bezüglich des Werts 27 sei noch angemerkt, dass es selbstverständlich auch denkbar ist, nicht Sensorendaten bezüglich des Passagiers, auf den hin optimiert werden soll, zu betrachten, sondern eine Eingabe zu berücksichtigen, die beispielsweise eine bestimmte Konfiguration der Ansteuerung durch das Steuergerät 2 aktiviert.

Die Funktion des Steuergeräts 2 ist dabei im Allgemeinen parametrierbar, wobei eine bestimmte, für gut gefundene Konfiguration selbstverständlich auch gespeichert werden kann. Auf diese Parametrierbarkeit wird in Beispielen noch näher eingegangen werden.

Wie durch den Block 23 angedeutet, ist das Steuergerät 2 zunächst dazu ausgebildet, das Anregungsfrequenz- und Beschleunigungsspektrum, wie es sich aus dem aktuellen Betriebszustand ergibt, zu analysieren und zur Vergleichmäßigung des Anregungs- und Beschleunigungsspektrums an dem hier beispielhaft betrachteten Sitz 4 die Fahrwerkssysteme 11 und 12 sowie die an dem Sitz 4 angeordneten Aktuatoren 19, 20 und 21 anzusteuern.

Es sei an dieser Stelle noch angemerkt, dass selbstverständlich schon bei Aktivierung des auf den Komfort des Passagiers auf dem Sitz 4 bezogenen Betriebsmodus des Steuergeräts 2 gewisse grundlegende Fahrwerkseinstellungen vorgenommen wurden, die ein besonders sanftes Fahren ohne größere Anregungen des Kraftfahrzeugs 1 in Form von harten Manövern und Stößen oder dergleichen erlauben. Auch die Kennlinien der Pedalerie 10 werden in diesem Sinne angepasst, so dass besonders harte Beschleunigungs- und Lenkmanöver möglichst ausgeschlossen werden. Auch die Nutzung gewisser, zu einem unruhigen Fahren führender Fahrzeugsysteme kann deaktiviert werden oder auf bestimmte Modi festgelegt werden, beispielsweise können ein ACC-System und eine Servolenkung nicht mehr eingesetzt werden. Schwellwerte eines ESP-Systems können ebenso im Hinblick auf einen ruhigen, sanften Fahrstil angepasst werden.

Das Steuergerät 2 versucht nun, von einem gleichmäßigen Anregungsfrequenz- und Beschleunigungsspektrum abweichenden Anregungen an dem Sitz 4 so entgegenzuwirken, dass diese zumindest in einem bestimmten Grad abgedämpft werden und nicht zu einer Störung des Passagiers führen können. Bezüglich innerer Anregungen kann dabei beispielsweise die Stellung der Pedale der Pedalerie 10 und der Lenkwinkel des Lenkrads 9 überwacht werden, um in der bis zum Effekt vorliegenden Totzeit die entsprechenden Vorkehrungen zu treffen, um beispielsweise einer Beschleunigung entgegenwirken zu können. Doch auch andere Sensoren können berücksichtigt werden, beispielsweise wenn das Kraftfahrzeug durch ein Schlagloch oder über einen Gegenstand fährt, so dass auch in einem solchen Fall ein möglichst gleichmäßiger Zustand des Sitzes 4 erhalten werden kann. Die Aktuatoren 21 sowie die Aktuatoren des Massagesystems 19 und des Sitzeinstellungssystems 20 sind dabei idealerweise so ausgebildet, dass Bewegungen des Sitzes 4 in allen möglichen Freiheitsgraden denkbar sind, um jeglichen Anregungen entsprechend entgegenwirken zu können.

Letztlich erfolgt die Komfortsteigerung am Sitz 4 beim Kraftfahrzeug 1 mit dem Steuergerät 2 in zwei Schritten. Zunächst führen die Fahrwerkssysteme 11 und 12 einen Nickausgleich und einen Wankausgleich bereits im Fahrwerk durch. Es bleiben jedoch selbstverständlich noch Restanregungen, die dann im zweiten Schritt von den Aktuatoren 19 - 21 am Sitz 4 gedämpft werden. Über die Aktuatoren 19 - 21 ist es mithin möglich, den Sitz letztlich von der Fahrzeugbewegung in einem beliebigen Grad zu entkoppeln. Im vorliegenden Ausführungsbeispiel ist vorgesehen, dass über einen Drehregler 28 am Sitz 4 der Grad der Entkopplung vom Passagier selbst eingestellt werden kann.

Es sei darauf hingewiesen, dass auch Eigenschaften des Passagiers selber berücksichtigt werden können, insbesondere auch die Lage eines ausgezeichneten Körperpunktes, insbesondere des Massenschwerpunkts des Torsos. Denn gerade eine übermäßige Bewegung der Organe soll vermieden werden, um den entsprechenden Komfort erzeugen zu können.

Block 24 symbolisiert eine ähnliche geartete Anpassung des Geräuschspektrums im Sinne einer Vergleichmäßigung. Hierzu können insbesondere Audiosysteme und Lautsprecher, die ohnehin im Kraftfahrzeug vorgesehen sind, sowie das Dämpfungs- und Filterungssystem 15 angesprochen werden. Ziel ist es auch hier, wie beschrieben, sowohl Fahrgeräusche als auch Außengeräusche möglichst auf einem gleichmäßigen, störungsfreien und eher ruhigen Niveau zu halten. Allerdings kann eingestellt werden, dass insbesondere bezüglich der Fahrzeuggeräusche ein höheres Geräuschniveau gewünscht wird, beispielsweise, wenn der Passagier die Geräusche als beruhigende Einschlafhilfe empfindet. Eine spezielle Funktion des erfindungsgemäßen Verfahrens ist es im Übrigen auch, insbesondere, wenn, wie später noch näher erläutert wird, der Fahrer schläft oder einschlafen möchte, dass bei einem Stillstand des Kraftfahrzeugs dennoch noch die Motorgeräusche eines fahrenden Kraftfahrzeugs erzeugt werden, um auch hier das Niveau konstant zu halten.

Eine Ansteuerung weiterer Komfortsysteme, Block 25, erfolgt größtenteils unter Berücksichtigung des den Zustand des Passagiers kennzeichnenden Werts, wozu beispielsweise Tätigkeiten anhand von Aufnahmen einer Kamera als Teil der Sensoren 18 ausgewertet werden können. Hält der Passagier ein Buch oder benutzt er einen Laptop, ist beispielsweise davon auszugehen, dass er diesen seine volle Aufmerksamkeit widmet. Dann kann beispielsweise die Beleuchtung entsprechend angepasst werden, beispielsweise durch Aktivieren von Leuchtmitteln im Innenraum oder dergleichen. Die Klimaanlage kann entsprechend eingestellt werden. Zusätzlich ist es jedoch beim erfindungsgemäßen Verfahren auch möglich, dass die spezielle Art der Tätigkeit bei der Art der Vergleichmäßigung des Zustands des Sitzes 4 berücksichtigt wird. Ist der Fahrer nämlich beispielsweise voll auf ein Buch oder einen Laptop, gegebenenfalls auch einen Film, konzentriert und nimmt er die Außenwelt ohnehin nicht wahr, so kann sogar vorgesehen sein, den Sitz 4 vollkommen von der Fahrzeugbewegung zu entkoppeln und letztlich beispielsweise in sich ruhen zu lassen. Wird allerdings festgestellt, wiederum durch Auswertung der Daten der Sensoren 18, dass der Passagier gerade trinkt und dabei aus dem Fenster sieht, kann der Grad der Entkopplung reduziert werden, da häufig der Körper mit den Bewegungen rechnet, die er optisch anhand des Fensters wahrnimmt. Möchte der Passagier beispielsweise schlafen oder befindet er sich schon in einem Schlaf, ist auch ein besonders gleichmäßiger Zustand wichtig. Es können hier beispielsweise die Fenster abgedunkelt werden und es kann über eine Audioanlage eine den Schlaf bzw. das Einschlafen unterstützende Musik abgespielt werden. Auch ein definiertes Schaukeln des Fahrzeugsitzes 4 kann den Einschlafvorgang unterstützen. Die Schlaf- und Entspannungskopfstütze kann ausgefahren werden. Bei allen diesen beschriebenen Beispielen gilt folglich, dass auch der Zustand des Fahrers bei der Art der Entkopplung durch das Steuergerät 2 berücksichtigt wird und zusätzlich weitere Komfortsysteme angesteuert werden.

Nichtsdestotrotz sei darauf hingewiesen, dass auch eine Anpassung an die Stimmung, insbesondere durch Ansteuerung der Komfortsysteme, Block 25, in das erfindungsgemäße Verfahren integriert werden kann. So können beispielsweise beruhigende Farben der Innenbeleuchtung ausgewählt werden und die Musikwahl der aktuellen Stimmung des Fahrers entsprechend erfolgen.

Es sei schließlich noch darauf hingewiesen, dass im Rahmen des Verfahrens bei Standphasen neben dem Verbrennungsmotor auch eine Autobatterie und sogar eine externe Energiequelle zum Betrieb der Fahrzeugsysteme genutzt werden kann. Beispielsweise ist es dann möglich, dass ein schlafender Passagier auch nach Abstellen des Kraftfahrzeugs zunächst noch im Auto verbleiben und ausschlafen kann, ohne dass die Komfortsteigerung durch die Fahrzeugsysteme deaktiviert werden müsste.

Schließlich sei noch angemerkt, dass es im Rahmen der vorliegenden Erfindung liegt, bei einem stillstehenden, beispielsweise parkenden Kraftfahrzeug 1 das erfindungsgemäße Verfahren dennoch auch bezüglich des Fahrersitzes 3 anzuwenden, der hierzu auch über die entsprechenden Aktuatoren verfügen kann.

## Patentansprüche

1. Verfahren zur Steuerung des Betriebs eines Kraftfahrzeugs,
**dadurch gekennzeichnet,**
**dass** wenigstens ein Fahrzeugsystem unter Berücksichtigung von den jeweils aktuellen Betriebszustand, insbesondere Fahrzustand, beschreibenden Daten zur Komfortsteigerung eines Passagiers des Kraftfahrzeugs angesteuert wird, **dadurch gekennzeichnet, daß** es sitzplatzspezifish angesteuert wird, wobei die Ansteuerung im Hinblick auf einen möglichst gleichmäßigen, stabilen Zustand an wenigstens einem nicht dem Fahrer zugeordneten Sitzplatz erfolgt, wobei das Anregungsfrequenz- und Beschleunigungsspektrum an einem Sitz analysiert und zur Vergleichmäßigung des Anregungsfrequenz- und Beschleunigungsspektrums an dem Sitz wenigstens ein an dem Sitz angeordneter Aktuator angesteuert wird.

2. Verfahren nach Anspruch 1,
**dadurch gekennzeichnet,**
**dass** zur Vergleichmäßigung des Anregungsfrequenz- und Beschleunigungsspektrums an dem Sitz zusätzlich wenigstens ein Fahrwerksystem angesteuert wird.

3. Verfahren nach Anspruch 2,
**dadurch gekennzeichnet,**
**dass** ein Fahrwerkssystem in einem komfortablen Betriebsmodus betrieben wird und/oder wenigstens ein Aktuator eines Fahrwerkssystems zur Kompensation von inneren und/oder äußeren Anregungen des Kraftfahrzeugs angesteuert wird.

4. Verfahren nach einem der vorangehenden Ansprüche,
**dadurch gekennzeichnet,**
**dass** Bedienelemente zur Einstellung eines Wunschanregungsfrequenz- und Beschleunigungsspektrums, insbesondere einer Amplitude, und/oder zur Einstellung eines Entkopplungsgrades zur Entkopplung des Sitzes vom tatsächlichen Fahrverhalten, verwendet werden.

5. Verfahren nach einem der vorangehenden Ansprüche,
**dadurch gekennzeichnet,**
**dass** eine Ansteuerung von an dem Sitz angeordneten Aktuatoren, insbesondere von Sitzmotoren, in Abhängigkeit von Betriebsgrößen des Kraftfahrzeugs, insbesondere eines Lenkeinschlags und/oder einer Pedalbetätigung, und/oder der Größe und/oder des Gewichts und/oder der Lage eines ausgezeichneten Körperpunktes, insbesondere des Massenschwerpunktes des Torsos, einer auf dem Sitz anwesenden Person erfolgt.

6. Verfahren nach einem der vorangehenden Ansprüche,
**dadurch gekennzeichnet,**
**dass** die Maßnahmen zur Komfortsteigerung bedienerseitig parametrierbar und/oder einstellbar sind, wobei insbesondere wenigstens eine Konfiguration gespeichert wird und/oder wenigstens eine Konfiguration aus mehreren Konfigurationen ausgewählt wird.

7. Verfahren nach einem der vorangehenden Ansprüche,
**dadurch gekennzeichnet,**
**dass** ein den Zustand des Passagiers, insbesondere eine Tätigkeit, beschreibender Wert, insbesondere anhand von Innenraumsensoren. ermittelt und ebenso bei der Ansteuerung der Fahrzeugsysteme berücksichtigt wird.

8. Verfahren nach einem der vorangehenden Ansprüche,
**dadurch gekennzeichnet,**
**dass**, insbesondere bei Standphasen, neben dem Verbrennungsmotor auch eine Autobatterie und/oder eine externe Energiequelle zum Betrieb der Fahrzeugsysteme genutzt wird.

9. Kraftfahrzeug (1) mit einem zur Durchführung des Verfahrens nach einem der vorangehenden Ansprüche ausgebildeten Steuergerät (2).

## Claims

1. Method for controlling the operation of a motor vehicle, **characterised in that** at least one vehicle system is actuated so as to take account of data that describe the current operational status, particularly the driving condition, in order to increase the comfort of a passenger of the motor vehicle, **characterised in that** it is actuated in seat-specific manner, the actuation specifically being carried out with a view to achieving a stable state that is as uniform as possible on at least one seat that is not assigned to the driver, the agitation frequency and acceleration spectrum being analysed on a seat and, in order to achieve a uniform agitation frequency and acceleration spectrum on the seat, at least one actuator arranged on the seat is actuated.

2. Method according to claim 1, **characterised in that** in order to even out the agitation frequency and acceleration spectrum on the seat at least one chassis system is additionally actuated.

3. Method according to claim 2, **characterised in that** a chassis system is operated in a comfortable operating mode and/or at least one actuator of a chassis system is actuated in order to compensate for internal and/or external agitations of the motor vehicle.

4. Method according to one of the preceding claims, **characterised in that** operating elements are used to achieve a desired agitation frequency and acceleration spectrum, particularly an amplitude, and/or to achieve a degree of decoupling for decoupling the seat from the actual vehicle handling.

5. Method according to one of the preceding claims, **characterised in that** the actuation of actuators arranged on the seat, particularly seat motors, is carried out as a function of operational variables of the motor vehicle, particularly a steering angle and/or operation of the pedals, and/or the size and/or weight and/or position of an assigned point on the body, particularly the centre of gravity of the torso, of a person occupying the seat.

6. Method according to one of the preceding claims, **characterised in that** the measures for increasing comfort can be parameterised and/or adjusted by the operator, at least one configuration being stored, in particular, and/or at least one configuration being selected from a plurality of configurations.

7. Method according to one of the preceding claims, **characterised in that** a value describing the status of the passenger, particularly an activity, is determined particularly by means of sensors in the vehicle interior and is also taken into consideration when actuating the vehicle systems.

8. Method according to one of the preceding claims, **characterised in that**, particularly in stationary phases, in addition to the internal combustion engine a car battery and/or an external energy source is also used to operate the vehicle systems.

9. Motor vehicle (1) having a control apparatus (2) for carrying out the method according to one of the preceding claims.

## Revendications

1. Procédé de commande du fonctionnement d'un véhicule automobile,
**caractérisé en ce que**
on commande au moins un système du véhicule en tenant compte des données décrivant l'état de fonctionnement respectivement courant, en particulier l'état de marche, pour augmenter le confort d'un passager du véhicule automobile, **caractérisé en ce qu'**il est commandé spécifiquement en matière de sièges assis, dans lequel la commande se fait eu égard à un état stable le plus uniforme possible sur au moins un siège assis non affecté au conducteur, dans lequel le spectre de fréquence d'excitation et d'accélération est analysé au niveau d'un siège et, pour homogénéiser le spectre de fréquence d'excitation et d'accélération sur le siège, au moins un actionneur agencé sur le siège est commandé .

2. Procédé selon la revendication 1,
**caractérisé en ce que**
on commande en plus au moins un système de châssis pour homogénéiser le spectre de fréquence d'excitation et d'accélération sur le siège.

3. Procédé selon la revendication 2,
**caractérisé en ce que**
l'on fait fonctionner un système de châssis en mode de fonctionnement confortable et/ou l'on commande au moins un actionneur d'un système de châssis pour compenser les excitations internes et/ou externes du véhicule automobile.

4. Procédé selon l'une quelconque des revendications précédentes,
**caractérisé en ce que**
on utilise des éléments de commande pour régler un spectre de fréquence d'excitation et d'accélération souhaité, en particulier une amplitude, et/ou pour régler un degré de découplage pour découpler le siège du comportement de roulement effectif.

5. Procédé selon l'une quelconque des revendications précédentes,
**caractérisé en ce que**
il se produit une commande d'actionneurs agencés sur le siège, en particulier de moteurs de sièges, en fonction de grandeurs de fonctionnement du véhicule automobile, en particulier d'un braquage de direction et/ou d'une commande de pédale et/ou de la grandeur et/ou du poids et/ou de la position d'un point remarquable du corps, en particulier du centre de gravité massique du torse d'une personne assise sur le siège.

6. Procédé selon l'une quelconque des revendications précédentes,
**caractérisé en ce que**
les mesures d'augmentation du confort côté utilisateur peuvent être paramétrées et/ou réglées, dans lequel on mémorise en particulier au moins une configuration et/ou l'on choisit au moins une configuration entre plusieurs configurations.

7. Procédé selon l'une quelconque des revendications précédentes,
**caractérisé en ce que**
l'on détecte une valeur décrivant l'état du passager, en particulier une activité, en particulier au moyen de capteurs de l'espace interne, et on en tient également compte dans la commande des systèmes du véhicule.

8. Procédé selon l'une quelconque des revendications précédentes,
**caractérisé en ce que**
l'on utilise, en particulier lors de phases d'arrêt, à côté du moteur de combustion, également un accumulateur pour auto et/ou une source d'énergie externe pour le fonctionnement des systèmes véhiculaires.

9. Véhicule automobile (1) comportant un appareil de commande (2) conçu pour réaliser le procédé selon l'une quelconque des revendications précédentes.
